# EUROPEAN PATENT APPLICATION

(11) **EP 4 335 290 A1**
(43) Date of publication of application: **13.03.2024**
(21) Application number: 23386076.6
(22) Date of filing: 10.08.2023
(51) Int. Cl.: A01K 83/02, A01K 83/04

(54) **TOWED-ADJUSTABLE FISHING MULTI-HOOK WITH MOBILE-BARBS**

(30) Priority: 21.08.2022 GR 20220100701
(71) Applicant: Vasilikis, Konstantinos, 70014 Port of Hersonissos (Heraklion), Crete (GR)
(72) Inventor: The designation of the inventor has not yet been filed

(57) **Abstract**

Triple fish hook comprising a cylindrical base having disk-shaped perforated members that are screwed to each other; three shanks extending away from a lower end of said base at circumferentially equal distances one from the other along a central axis of the cylindrical base; barb ends of the shanks movable and coupled to each other; an extra rope or wire of which a length is adjustable by a fisherman; shanks made of stainless steel and tips of each shank made of plastic material.

## Description

This invention refers to a fishing hook that contains three stainless steel barbs, three strong plastic points, four screws and two security points. All of these, can cooperate to each other, in way that this can lead to its flawless functionality.

The stainless steel barbs, with which we have equipped the towed adjustable fishing hook, are known as a very strong metallic material that do not rust. Even if a barb breaks, for any reason, it will not lead it to rust, because of the nickel atoms that keep the iron atoms safe and separated from the oxygen that can cause rust.

The goal of this invention is to solve the problem of the hooking of the fish from great but also some times from small heights. Also, it solves the problem of length and of the weight of the hook, because its structure is small in length but at the same time also light-weight.

For the last part, we have to mention the most important thing, the safety of the fisherman in the procedure, because,for a fish to be hooked with a simple fishing hook, there are a lot of times that the life of the fisherman is in danger, as the fisherman tries to get as close as they can,leaving their initial safe position, in order to reach the fish-goal. With the towed-adjustable hook, the fisherman can easily avoid any unsafe, dangerous activity, act or position, as it is not needed for them to leave their initial fishing point.

The characteristics of the invention or defined from its claims.

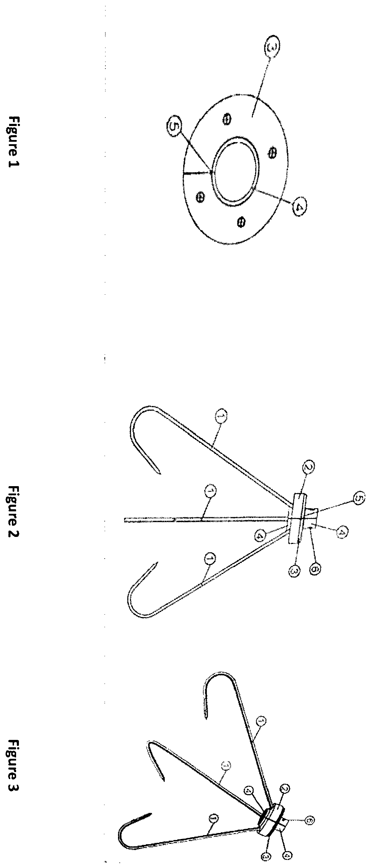

## Claims

1. The (towed-adjustable) fishing multi hook corporates with the thread of the fishing rod on which the fish has been caught. Its construction has been made in a way that it cannot be divided or separated from the heading of the thread which helps the hook to go straight towards the target.

2. The (towed-adjustable) fishing hook, as it is described in the main claim, it consists of 3 different stainless barbs that corporate to each other, which helps the hook to go straight to no other place than the target-fish.

3. The (towed-adjustable) fishing hook, as it has been referred on the above-mentioned claims, it also consists of a system that connects the barbs and makes them to corporate and/or for them to work at the same time, so that, when we activate one of the three barbs to catch a fish, if one of the barbs does not manage to hook a fish, the two rest are there to secure that the target is finally nailed and hooked.

4. The (towed-adjustable) fishing hook, as it has been referred on the above-mentioned claims, includes an intermittent point, that include two spots for the thread, inside the system that hold the barbs. A) The first spot is the insertion point of the thread in the system. B) The second spot, turns by hand, manually the circular drills, it is then locked inside the point, and that leads for the thread to be secured inside of it and it does not allow the thread to leave the point.
